(19) Europäisches Patentamt / European Patent Office / Office européen des brevets

(11) **EP 1 772 953 B1**

(12) **FASCICULE DE BREVET EUROPEEN**

(45) Date de publication et mention
de la délivrance du brevet:
**11.06.2014 Bulletin 2014/24**

(51) Int Cl.:
*H02P 3/18* (2006.01)     *B60L 7/06* (2006.01)
*B60L 7/14* (2006.01)     *B60L 7/22* (2006.01)
*B60L 9/22* (2006.01)

(21) Numéro de dépôt: **06291504.6**

(22) Date de dépôt: **25.09.2006**

(54) **Procédé de maintien d'une tension continue à l'entrée d'un convertisseur continu-alternatif de tension, support d'enregistrement pour ce procédé et véhicule électrique**

Verfahren zur Aufrechterhaltung der Gleichstromspannung am Eingang eines Gleichtrom-Wechselstrom Konverters, Speichermedium für das Verfahren und elektrisches Fahrzeug

Method for maintaining the DC voltage at the input of a DC-AC voltage converter, storage means for this method and electric vehicle

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.10.2005 FR 0510283**

(43) Date de publication de la demande:
**11.04.2007 Bulletin 2007/15**

(73) Titulaire: **ALSTOM Transport SA**
**92300 Levallois-Perret (FR)**

(72) Inventeur: **Chanal, Pierre**
**65360 Vielle Adour (FR)**

(74) Mandataire: **Blot, Philippe Robert Emile et al**
**Cabinet Lavoix**
**2, place d'Estienne d'Orves**
**75441 Paris Cedex 09 (FR)**

(56) Documents cités:
**US-A- 5 614 796**

- **PATENT ABSTRACTS OF JAPAN vol. 011, no. 269 (M-621), 2 septembre 1987 (1987-09-02) & JP 62 071404 A (TOSHIBA CORP), 2 avril 1987 (1987-04-02)**
- **PATENT ABSTRACTS OF JAPAN vol. 010, no. 279 (E-439), 20 septembre 1986 (1986-09-20) & JP 61 098187 A (MITSUBISHI ELECTRIC CORP), 16 mai 1986 (1986-05-16)**
- **PATENT ABSTRACTS OF JAPAN vol. 006, no. 067 (E-104), 28 avril 1982 (1982-04-28) & JP 57 009278 A (FUJI ELECTRIC CO LTD), 18 janvier 1982 (1982-01-18)**

**Description**

L'invention concerne un procédé de maintien d'une tension continue à l'entrée d'un convertisseur continu-alternatif de tension afin de maintenir magnétisé un moteur asynchrone, un support d'enregistrement pour ce procédé et un véhicule électrique.

Dans cette description on utilise le terme « bus d'alimentation » pour désigner un bus d'alimentation continue d'un véhicule électrique qui est, d'un côté, connectable et déconnectable d'une caténaire et, de l'autre côté, raccordé au moteur asynchrone par l'intermédiaire d'un convertisseur continu-alternatif pour alimenter ce moteur. Ce bus est équipé d'unités de maintien temporaire d'une tension continue sur le bus même lorsque celui-ci n'est plus alimenté par la caténaire. Typiquement ces unités de maintien sont formées à partir de condensateurs et de résistances de décharge.

Le bus d'alimentation continue est également appelé « bus DC ».

Par caténaire, on désigne non seulement des câbles d'alimentation suspendus sur lesquels un pantographe du véhicule électrique vient frotter mais également un rail d'alimentation posé sur le sol et sur lequel vient frotter un patin du véhicule électrique. Ce rail d'alimentation est connu sous le terme de « troisième rail » dans le domaine ferroviaire.

Il est connu de faire freiner des véhicules en faisant fonctionner le moteur asynchrone en générateur et en dissipant la puissance électrique générée dans des résistances ou un rhéostat. La plupart des constructeurs préfèrent ce type de freinage électrique ou rhéostatique au freinage mécanique car il permet de minimiser le coût de maintenance des pièces d'usure sur ces véhicules.

Lors d'un freinage rhéostatique, si le bus DC est connecté à la caténaire, un retour d'énergie vers la caténaire est observé. Un tel retour d'énergie n'est pas acceptable pour certains exploitants.

D'autre part, si le bus DC est déconnecté de la caténaire, la tension continue sur ce bus décroît progressivement et devient insuffisante pour magnétiser le moteur de sorte qu'un freinage rhéostatique n'est plus possible.

Pour remédier à ce problème dans un mode de roue libre pendant lequel le véhicule roule sur son erre (en roue libre) et le bus DC est déconnecté de la caténaire, des procédés connus maintiennent une tension continue de magnétisation sur ce bus DC en exécutant une phase de pré-freinage.

Comme décrit dans JP 62 071404 ou JP 57 009 278 cette phase de pré-freinage comporte :

    a) une étape de magnétisation du moteur à partir de la tension continue présente sur le bus, puis
    b) une étape de fonctionnement du moteur en générateur de tension alternative et de fonctionnement du convertisseur en redresseur de la tension alternative pour recharger le bus avec de la tension continue,

On connaît de JP 61 098 187 un procédé de maintien d'une tension continue de magnétisation sur le bus DC comportant également :

    c) une étape d'arrêt du convertisseur lorsque la tension continue du bus atteint un seuil haut, puis
    d) une étape de maintien à l'arrêt du convertisseur tant que la tension continue du bus reste supérieure à une tension continue minimale de magnétisation du moteur asynchrone.

Dans les procédés connus, l'étape b) dure tant que le véhicule roule sur son erre et que le bus DC est déconnecté de la caténaire. Le moteur fonctionne donc constamment en générateur pour maintenir une tension de magnétisation suffisante sur le bus DC.

Ceci a pour conséquence d'imposer en permanence une décélération du véhicule électrique même si celui-ci roule sur son erre.

L'invention vise à remédier à cet inconvénient en proposant un procédé propre à minimiser la décélération imposée au véhicule électrique pour maintenir une tension de magnétisation sur le bus DC.

L'invention a donc pour objet un procédé de maintien d'une tension continue suivant la revendication 1.

Lorsque le moteur fonctionne en générateur, le convertisseur fournit de la tension continue au bus DC qui se charge et le moteur freine le véhicule.

Lorsque le convertisseur est arrêté, le moteur ne fonctionne plus en générateur et ne freine donc plus le véhicule électrique. Tant que le convertisseur est maintenu arrêté, la tension sur le bus DC décroît progressivement ce qui correspond à la décharge, par exemple, de condensateurs du bus DC. Dès lors, en alternant les étapes a), b) et c), d), il est possible de maintenir une tension continue de magnétisation sur ce bus sans faire fonctionner en permanence le moteur en générateur. Ceci minimise la décélération imposée au véhicule électrique dans le mode de roue libre.

De plus, dans ce procédé, seule la commande du convertisseur est modifiée de sorte qu'il n'est pas nécessaire d'avoir recours à des équipements supplémentaires pour charger le bus DC juste avant un freinage rhéostatique.

Enfin, l'arrêt du convertisseur permet également aux unités de maintien temporaire de la tension continue sur le bus de se décharger de sorte qu'il n'est pas nécessaire d'utiliser un équipement auxiliaire ou un rhéostat à cette fin.

Le procédé de maintien d'une tension continue de magnétisation présente l'avantage que l'imposition d'une pulsation de glissement égale $1/T_r$, où $T_r$ et la constante de temps du moteur décroît les pertes par échauffement du moteur et minimise donc la décélération du véhicule.

Les modes de réalisation de ce procédé peuvent comporter une ou plusieurs des caractéristiques suivantes :

- le seuil haut est choisi inférieur à une tension minimale d'alimentation des équipements auxiliaires,
- lors de l'étape b) le convertisseur est commandé pour que l'énergie générée par le moteur soit supérieure à l'énergie minimale nécessaire pour compenser les pertes par échauffement du moteur et inférieure à 1,05 fois cette énergie minimale ;
- les étapes a) à d) sont réitérées uniquement tant que le véhicule électrique roule sur son erre à une vitesse supérieure à un seuil prédéterminé de vitesse permettant de recharger le bus.

Les modes de réalisation du procédé de maintien d'une tension continue de magnétisation présente en outre les avantages suivants :

- le fait de ne pas alimenter les équipements auxiliaires raccordés au bus DC minimisent également la décélération du véhicule lorsque celui-ci roule sur son erre ;
- ne faire générer par le moteur qu'une énergie électrique au maximum égale 1,05 fois l'énergie nécessaire pour compenser les pertes par échauffement du moteur permet de rendre le freinage négligeable devant l'inertie du véhicule et évite donc que le conducteur ou les passagers ressentent des à-coups lors de l'alternance des étapes b) et d) ;

L'invention a également pour objet un support d'enregistrement d'informations comportant des instructions pour l'exécution d'un procédé de maintien de la tension continue de magnétisation d'un moteur asynchrone sur un bus DC lorsque ces instructions sont exécutées par un calculateur électronique.

L'invention a également pour objet un véhicule électrique adapté pour mettre en oeuvre le procédé de maintien ci-dessus, ce véhicule électrique étant équipé :

- d'au moins un moteur asynchrone d'entraînement en rotation de roues motrices,
- d'un convertisseur continu-alternatif commandable apte à fonctionner comme un onduleur de tension continue pour alimenter le moteur et, en alternance, comme un redresseur de tension continue,
- un bus d'alimentation continue connectable et déconnectable d'une caténaire et raccordé au moteur par l'intermédiaire du convertisseur pour alimenter le convertisseur en tension continue, ce bus étant équipé d'un dispositif de maintien temporaire d'une tension continue sur le bus lorsque le bus est déconnecté de la caténaire, et
- un calculateur propre à commander :

    a) une magnétisation du moteur, puis

b) le fonctionnement du moteur en générateur et le fonctionnement du convertisseur en redresseur lors d'un mode de roue libre pendant lequel le bus est déconnecté de la caténaire et le véhicule électrique roule sur son erre ; caractérisé en ce que le calculateur est apte lors du mode de roue libre, à commander
c) l'arrêt du convertisseur lorsque la tension continue du bus atteint un seuil haut, et
d) le maintien du convertisseur arrêté tant que la tension continue du bus reste supérieure à une tension continue minimale de magnétisation du moteur asynchrone, avant de réitérer les commandes a) et b), la pulsation de glissement du moteur lors de l'étape b) étant choisie égale à $1 / T_r$, où $T_r$ est la constante de temps du moteur.

Les modes de réalisation de ce véhicule électrique peuvent comporter la caractéristique suivante :

- le dispositif de maintien temporaire d'une tension continue est formé d'au moins un condensateur apte à maintenir temporairement une tension continue sur le bus d'alimentation lorsque ce bus est déconnecté de la caténaire.

L'invention sera mieux comprise à la lecture de la description qui va suivre donnée uniquement à titre d'exemple et faite en se référant aux dessins sur lesquels :

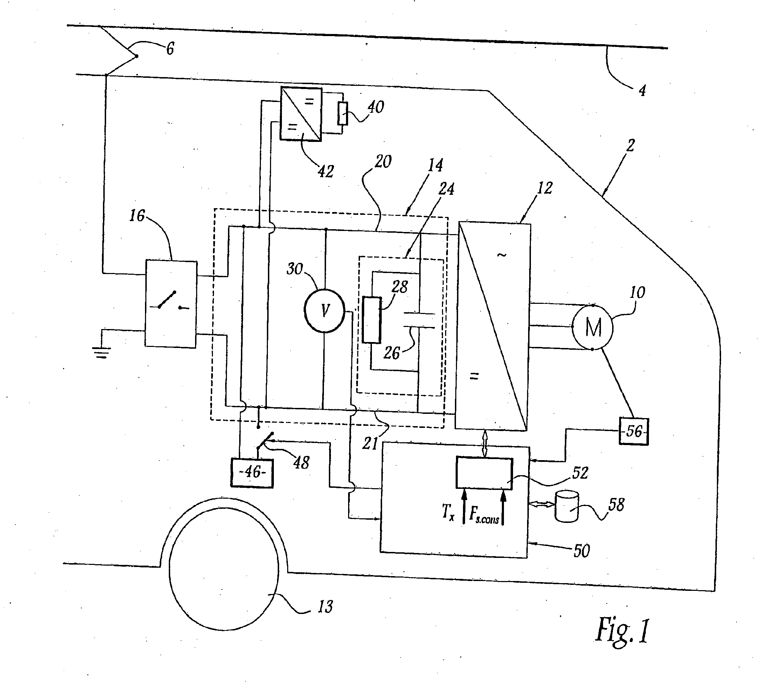

- la figure 1 est une illustration schématique de l'architecture d'un véhicule électrique équipé d'un bus DC, et
- la figure 1 est une illustration schématique de l'architecture d'un véhicule électrique équipé d'un bus DC, et
- la figure 2 est un organigramme d'un procédé de maintien d'une tension continue de magnétisation d'un moteur asynchrone sur le bus DC du véhicule de la figure 1.

La figure 1 représente un véhicule électrique 2 équipé d'au moins un moteur asynchrone d'entraînement en rotation de roues motrices 13 de ce véhicule. Ce véhicule est, par exemple, une locomotive raccordée à une caténaire 4 par l'intermédiaire d'un pantographe 6.

Ici, pour simplifier l'illustration, seul un système d'alimentation d'un moteur asynchrone 10 propre à entraîner en rotation les roues 13 est représenté.

Les autres systèmes d'alimentation de moteurs asynchrones du véhicule 2 sont, par exemple, identiques à celui décrit ici.

Le système d'alimentation du moteur 10 comprend :

- un convertisseur continu-alternatif commandable 12 apte à alimenter des bobinages au stator du moteur 10,

- un bus DC 14 raccordé au convertisseur 12 pour l'alimenter en tension continue, et
- une unité 16 de raccordement du bus 14 à la caténaire 4.

Le convertisseur 12 est propre à fonctionner comme un onduleur de tension continue pour alimenter le moteur 10 en tension triphasée et, en alternance, comme un redresseur de tension alternative pour alimenter le bus 14 en tension redressée produite à partir d'une tension triphasée générée par le moteur 10 lorsqu'il fonctionne en générateur.

Le bus DC 14 est formé de deux conducteurs électriques 20 et 21. Des extrémités des conducteurs électriques 20, 21 sont raccordées à des entrées respectives du convertisseur 12. Des extrémités opposées des conducteurs 20 et 21 sont raccordées à des sorties respectives de l'unité de raccordement 16.

Le bus 14 comprend aussi au moins un dispositif de maintien temporaire d'une tension continue entre les conducteurs 20 et 21. Ici, pour simplifier l'illustration, seul un dispositif 24 de maintien temporaire d'une tension continue est représenté. Le dispositif 24 est, par exemple, formé d'un condensateur 26 raccordé entre les conducteurs 20 et 21 et d'une résistance 28 de décharge du condensateur raccordée en parallèle aux bornes du condensateur 26. La résistance 28 est, par exemple, choisie pour permettre une diminution de 50 volts par seconde de la tension continue présente aux bornes du condensateur 26.

La tension continue $V_{bus}$ sur le bus 14 est mesurée par un voltmètre 30. La tension $V_{bus}$ est égale à 1800 $V_{DC}$ lorsque le bus 14 est connecté à la caténaire 4.

L'unité 16 de raccordement permet de connecter et de déconnecter électriquement le bus 14 de la caténaire 4. A cet effet, une entrée de l'unité 16 est raccordée par l'intermédiaire du pantographe 6 à la caténaire 4. L'unité 16 contient, par exemple, un disjoncteur et, éventuellement, un redresseur de tension si la caténaire 4 est alimentée avec une tension alternative.

Le bus 14 est également utilisé pour alimenter des équipements auxiliaires du véhicule 2 tels que, par exemple, un dispositif de chauffage, un dispositif de ventilation ou des pompes à eau. Pour simplifier l'illustration, seul un équipement auxiliaire 40 est représenté. L'équipement 40 est raccordé aux conducteurs 20 et 21 par l'intermédiaire d'un convertisseur continu-continu 42. Ce convertisseur 42 présente la propriété d'arrêter automatiquement l'alimentation de l'équipement 40 lorsque la tension $V_{bus}$ est inférieure à un seuil prédéterminé $S_h$. A titre d'exemple, pour un bus 14 sur laquelle la tension continue est normalement de 1800 $V_{dc}$ le seuil $S_h$ est choisi égal à 900 $V_{dc}$ c'est-à-dire la moitié de la tension continue normale.

Le bus 14 est également raccordé à un rhéostat 46 par l'intermédiaire d'un interrupteur commandable 48.

Ce rhéostat est destiné à dissiper l'énergie générée par le moteur 10 lors d'un freinage rhéostatique.

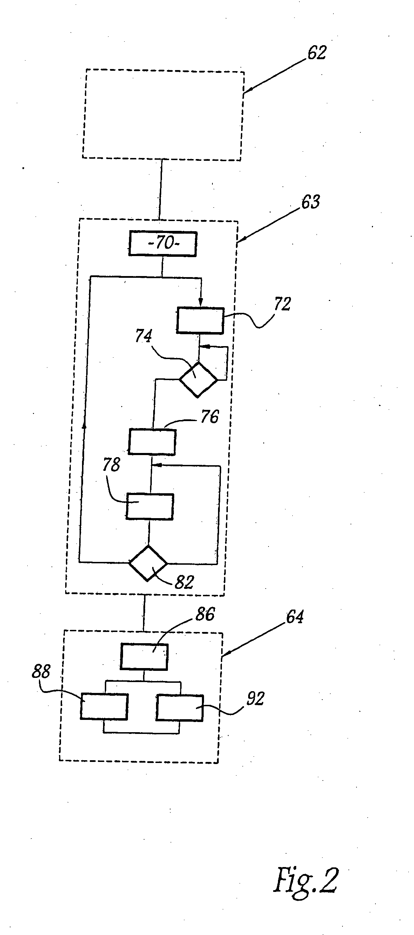

Le véhicule 2 comporte également un calculateur électronique 50 propre à commander le convertisseur 12 pour exécuter le procédé de maintien d'une tension de magnétisation de la figure 2. Ce calculateur est également apte à commander l'interrupteur 48.

Pour commander le convertisseur 12, le calculateur comprend un module conventionnel 52 de pilotage par modulation de largeur d'impulsions. Ce module 52 est équipé de deux entrées l'une pour recevoir une consigne $f_{s\cdot cons}$ de fréquence statorique pour le moteur et l'autre pour recevoir un taux $T_x$ de modulation.

La fréquence statorique est la fréquence à laquelle le champ magnétique tourne à l'intérieur du moteur 10. Cette fréquence correspond à une vitesse de synchronisme.

Pour exécuter le procédé de la figure 2, le calculateur 50 est raccordé au voltmètre 30 et à un capteur 56 de la fréquence mécanique du rotor. La fréquence mécanique correspond à la vitesse de rotation de l'arbre du moteur 10.

Le calculateur 50 est ici réalisé à partir d'un calculateur programmable conventionnel apte à exécuter des instructions enregistrées sur un support d'enregistrement d'informations 58. A cet effet, le support 58 comporte des instructions pour l'exécution du procédé de la figure 2 lorsque ces instructions sont exécutées par le calculateur 50.

Le fonctionnement du calculateur 50 et du système d'alimentation du moteur 10 va maintenant être décrit en regard du procédé de la figure 2.

Le véhicule 2 peut basculer entre les trois modes de fonctionnement suivants :

- un mode 62 de traction lors duquel le moteur 10 entraîne en rotation les roues motrices 13,
- un mode 63 de roue libre lors duquel le véhicule roule sur son erre et le bus 14 est déconnecté de la caténaire 4, et
- un mode 64 de freinage rhéostatique lors duquel le véhicule 2 est décéléré.

En mode de traction, le bus 14 est raccordé par l'intermédiaire de l'unité 16 à la caténaire 4. Dans ce mode de traction, le convertisseur 12 fonctionne en onduleur pour alimenter le moteur à l'aide d'une tension triphasée produite à partir de la tension continue présente sur le bus 14.

Lorsque le véhicule 2 roule en pente où qu'il est nécessaire de le laisser décélérer doucement, il est intéressant alors de passer dans le mode 63 de roue libre. Dans ce mode de roue libre, l'unité 16 déconnecte, lors d'une étape 70, le bus 14 de la caténaire 4. Ensuite, lors d'une étape 72, le calculateur 50 arrête le convertisseur 12. Lorsque le convertisseur 12 est arrêté, le moteur 10 n'est plus alimenté et se démagnétise. Ensuite, le calculateur procède à une étape 74 de maintien à l'arrêt du convertisseur 12 tant que la tension $V_{bus}$ est supérieure à une tension minimale $V_{min}$ de magnétisation du moteur 10. Pendant cette étape 74, la tension $V_{bus}$ décroît progressivement car le condensateur 26 se décharge par l'intermédiaire de la résistance 28.

Dès que la tension $V_{bus}$ mesurée par le voltmètre 30 devient inférieure au seuil $V_{min}$, le calculateur commande, lors d'une étape 76, le convertisseur 12 de manière à magnétiser le moteur 10 à partir de la tension $V_{bus}$ encore présente sur le bus 14. A cet instant là, la tension $V_{bus}$ est, par exemple, égale au seuil $V_{min}$.

Dès le début de la magnétisation du moteur et sans attendre que le moteur soit complètement magnétisé, le calculateur 50 commande le convertisseur pour que celui-ci fasse fonctionner le moteur 10 en générateur lors d'une étape 78. Lors de l'étape 78, le calculateur 50 commande également le convertisseur 12 pour que celui-ci fonctionne en redresseur. Lors des étapes 76 et 78, le moteur 10 génère une tension triphasée alternative qui est redressée par le convertisseur 12 de sorte que le bus DC 14 est alimenté en tension continue, ce qui permet de recharger le dispositif 24.

Plus précisément, lors de l'étape 78, la consigne de fréquence $F_{s.cons.}$ est choisie égale à la fréquence mécanique mesurée par le capteur 56 moins une pulsation de glissement $F_g$. Dans ce mode de réalisation, la pulsation $F_g$ est choisie égale à $1/T_r$, où $T_r$ est la constante de temps du moteur. Grâce à ce choix de la pulsation de glissement, le courant direct $I_d$ et le courant de quadrature $I_q$ utilisés pour commander le moteur 10 sont égaux ce qui minimise les pertes par échauffement. Par perte par échauffement on entend ici à la fois les pertes par effet Joule et les pertes par frottement.

Pendant l'étape 78, la consigne de taux de modulation $T_x$ envoyée au module 52 est déterminée en fonction de la relation suivante :

$$Tx = [0,78.V_{bus}]/V_{ac} \quad (I)$$

- «. » est le symbole multiplication
- «/» : est le symbole « division »
- $V_{bus}$ est la tension continue sur le bus 14,
- $V_{AC}$ est la tension efficace alternative entre phases générée par le moteur 10.

Lors de l'étape 78, le calculateur commande le moteur par l'intermédiaire du convertisseur 12 de manière à ce que la quantité d'énergie générée par le moteur 10 soit juste supérieure à la quantité d'énergie minimale nécessaire pour compenser les pertes par échauffement du moteur 10 et au maximum égale à 1,05 fois cette énergie minimale. Ainsi, la quantité d'énergie générée par le moteur 10 est légèrement excédentaire par rapport à la quantité d'énergie consommée par le moteur 10 lui-même.

Cet excédent d'énergie permet donc de charger le condensateur 26. De plus, comme cet excédent d'énergie est petit, il correspond à un freinage minimal du moteur 10 de sorte que le conducteur du véhicule ne ressent aucun à-coups lorsque le moteur 10 se met à fonctionner en générateur.

Lors d'une étape 82, le calculateur 50 vérifie que la tension $V_{bus}$ est inférieure au seuil $S_h$. Dans l'affirmative, le fonctionnement du moteur en générateur et le fonctionnement du convertisseur 12 en redresseur lors de l'étape 78 est maintenu.

Dans le cas contraire, le calculateur retourne à l'étape 72.

Ainsi, puisque la tension sur le bus 14 ne dépasse pas le seuil $S_h$, des équipements auxiliaires tel que l'équipement 40 ne sont pas alimentés, ce qui permet de limiter la quantité d'énergie prélevée sur le moteur fonctionnant en générateur et donc de limiter la décélération du véhicule 2.

Les étapes 72 à 82 sont réitérées tant que le véhicule se déplace sur son erre à une vitesse suffisante pour permettre au moteur 10 de recharger le condensateur 26 lors de l'étape 78. Par exemple, la vitesse du véhicule 2 doit être supérieure à un seuil prédéterminé de 10 km/h. Lorsque la vitesse du véhicule 2 n'est plus suffisante pour recharger le condensateur 26, le véhicule bascule dans un mode de fonctionnement classique en utilisant, par exemple, une phase de pré-freinage.

A tout moment, pendant le mode de roue libre, le conducteur du véhicule 2 peut passer en mode de freinage rhéostatique. A cet effet, par exemple, le conducteur déplace une manette de frein. En réponse, à ce déplacement, le calculateur 50 procède à une étape 86 de magnétisation du moteur 10 à partir de la tension $V_{bus}$ présente sur le bus 14. Cette étape 86 est, par exemple, identique à l'étape 76. Puis, dès que le moteur 10 commence à être magnétisé, le calculateur 50 commande, lors d'une étape 88, le convertisseur 12 pour faire fonctionner le moteur 10 en générateur et le convertisseur 12 en redresseur.

En parallèle, lors d'une étape 92, le calculateur 50 commande la fermeture de l'interrupteur 48 pour raccorder le rhéostat 46 au bus DC. Dans cet état de fonctionnement, la tension triphasée générée par le moteur 10 est convertie par le convertisseur 12 en tension continue sur le bus DC. Cette tension continue est dissipée par le rhéostat 46 sous forme de chaleur ce qui permet de freiner le véhicule 2.

Les étapes 88 et 92 durent tant que le conducteur maintient son action de freinage.

De nombreuses autres modes de réalisation du véhicule 2 et du procédé de la figure 2 sont possibles. Par exemple, le seuil à partir duquel le calculateur 50 arrête de recharger le bus 14 de l'étape 82 peut être choisi différent du seuil $S_h$.

## Revendications

**1.** Procédé de maintien d'une tension continue à l'entrée d'un convertisseur continu-alternatif de tension afin de maintenir magnétisé un moteur asynchrone, l'entrée du convertisseur continu-alternatif étant électriquement connecté à un bus d'alimentation continue d'un véhicule électrique, ce bus d'alimentation étant connectable et déconnectable d'une caténaire pour alimenter le moteur, ce procédé comportant dans un mode de roue libre pendant lequel le véhicule roule sur son erre et le bus est déconnecté de la caténaire :

a) une étape (76) de magnétisation du moteur à partir de la tension continue présente sur le bus, puis

b) une étape (78) de fonctionnement du moteur en générateur de tension alternative et de fonctionnement du convertisseur en redresseur de la tension alternative pour recharger le bus avec de la tension continue, dans le mode de roue libre, **caractérisé en ce que** le procédé comporte :

c) une étape (72) d'arrêt du convertisseur lorsque la tension continue du bus atteint un seuil haut, puis

d) une étape (74) de maintien à l'arrêt du convertisseur tant que la tension continue du bus reste supérieure à une tension continue minimale de magnétisation du moteur asynchrone, avant de retourner à l'étape a), la pulsation de glissement du moteur lors de l'étape b) étant choisie égale à 1 / $T_r$, où $T_r$ est la constante de temps du moteur.

**2.** Procédé selon la revendication 1, pour un véhicule électrique équipé d'au moins un équipement électrique auxiliaire dont l'alimentation à partir du bus est automatiquement coupée lorsque la tension continue du bus descend en dessous d'une tension minimale d'alimentation des équipements auxiliaires, **caractérisé en ce que** le seuil haut est choisi inférieur à cette tension minimale d'alimentation des équipements auxiliaires.

**3.** Procédé selon l'une quelconque des revendications précédentes, **caractérisé en ce que** lors de l'étape b) le convertisseur est commandé pour que l'énergie générée par le moteur soit supérieure à l'énergie minimale nécessaire pour compenser les pertes par échauffement du moteur et inférieure à 1,05 fois cette énergie minimale.

**4.** Procédé selon l'une quelconque des revendications précédentes, **caractérisé en ce que** les étapes a) à d) sont réitérées uniquement tant que le véhicule électrique roule sur son erre à une vitesse supérieure à un seuil prédéterminé de vitesse permettant de recharger le bus.

**5.** Support d'enregistrement d'informations, **caractérisé en ce qu'**il comporte des instructions pour l'exécution d'un procédé selon l'une quelconque des revendications précédentes, lorsque ces instructions sont exécutées par un calculateur électronique.

**6.** Véhicule électrique équipé :

- d'au moins un moteur asynchrone (10) d'entraînement en rotation de roues motrices,
- d'un convertisseur continu-alternatif (12) commandable apte à fonctionner comme un onduleur de tension continue pour alimenter le moteur et, en alternance, comme un redresseur de tension continue,
- un bus (14) d'alimentation continue connectable et déconnectable d'une caténaire et raccordé au moteur par l'intermédiaire du convertisseur pour alimenter le convertisseur en tension continue, ce bus étant équipé d'un dispositif (24) de maintien temporaire d'une tension continue sur le bus lorsque le bus est déconnecté de la caténaire, et
- un calculateur (50) propre à commander :

a) une magnétisation du moteur, puis
b) le fonctionnement du moteur en générateur et le fonctionnement du convertisseur en redresseur lors d'un mode de roue libre pendant lequel le bus est déconnecté de la caténaire et le véhicule électrique roule sur son erre, **caractérisé en ce que** le calculateur est apte lors du mode de roue libre, à commander
c) l'arrêt du convertisseur lorsque la tension continue du bus atteint un seuil haut, et
d) le maintien du convertisseur arrêté tant que la tension continue du bus reste supérieure à une tension continue minimale de magnétisation du moteur asynchrone, avant de réitérer les commandes a) et b)

la pulsation de glissement du moteur lors de l'étape b) étant choisie égale à 1 / $T_r$, où $T_r$ est la constante de temps du moteur.

**7.** Véhicule électrique selon la revendication 6 **caractérisé en ce que** le dispositif (24) de maintien temporaire d'une tension continue est formé d'au moins un condensateur (26) apte à maintenir temporairement une tension continue sur le bus d'alimentation lorsque ce bus est déconnecté de la caténaire.

**Patentansprüche**

1. Verfahren zum Aufrechterhalten einer Gleichspannung am Eingang eines Gleichspannungs/Wechselspannungs-Umsetzers, um einen asynchronen Motor magnetisiert zu halten, wobei der Eingang des Gleichspannungs/Wechselspannungs-Umsetzers mit einem Gleichspannungsversorgungsbus eines Elektrofahrzeugs elektrisch verbunden ist, wobei dieser Versorgungsbus mit einer Fahrleitung verbunden und hiervon getrennt werden kann, um den Motor zu versorgen, wobei dieses Verfahren in einer Freilaufbetriebsart, in der das Fahrzeug mit seiner Ausrollgeschwindigkeit rollt und der Bus von der Fahrleitung getrennt ist, Folgendes umfasst:

   a) einen Schritt (76) des Magnetisierens des Motors anhand der am Bus anliegenden Gleichspannung, dann
   b) einen Schritt (78) des Arbeitens des Motors als Wechselspannungs-generator und des Arbeitens des Umsetzers als Gleichrichter für die Wechselspannung, um den Bus mit der Gleichspannung wieder aufzuladen, **dadurch gekennzeichnet, dass** das Verfahren in der Freilaufbetriebsart umfasst:
   c) einen Schritt (72) des Anhaltens des Umsetzers, wenn die Gleichspannung des Busses einen oberen Schwellenwert erreicht, dann
   d) einen Schritt (74) des fortgesetzten Anhaltens des Umsetzers, solange die Gleichspannung des Busses größer als eine minimale Gleichspannung für die Magnetisierung des asynchronen Motors bleibt, bevor eine Rückkehr zum Schritt a) erfolgt,

   wobei die Pulsation des Gleitens des Motors im Schritt b) gleich $1/T_r$ gewählt wird, wobei $T_r$ die Zeitkonstante des Motors ist.

2. Verfahren nach Anspruch 1 für ein Elektrofahrzeug, das mit wenigstens einer elektrischen Zusatzausrüstung ausgerüstet ist, deren Versorgung anhand des Busses automatisch unterbrochen wird, wenn die Gleichspannung des Busses unter eine minimale Versorgungsspannung der Zusatzausrüstungen abfällt, **dadurch gekennzeichnet, dass** der obere Schwellenwert niedriger als diese minimale Versorgungsspannung der Zusatzausrüstungen gewählt wird.

3. Verfahren nach einem der vorhergehenden Ansprüche, **dadurch gekennzeichnet, dass** im Schritt b) der Umsetzer so gesteuert wird, dass die von dem Motor erzeugte Energie größer ist als die Energie, die mindestens notwendig ist, um die Verluste durch die Erwärmung des Motors auszugleichen, und kleiner ist als das 1,05-Fache dieser minimalen Energie.

4. Verfahren nach einem der vorhergehenden Ansprüche, **dadurch gekennzeichnet, dass** die Schritte a) bis d) nur solange wiederholt werden, bis das Elektrofahrzeug mit seiner Ausrollgeschwindigkeit mit einer Geschwindigkeit rollt, die höher ist als ein vorgegebener Geschwindigkeitsschwellenwert, der ermöglicht, den Bus wieder aufzuladen.

5. Datenaufzeichnungsträger, **dadurch gekennzeichnet, dass** er Befehle für die Ausführung eines Verfahrens nach einem der vorhergehenden Ansprüche enthält, wenn diese Befehle durch einen elektronischen Rechner ausgeführt werden.

6. Elektrofahrzeug, das ausgerüstet ist mit:

   - wenigstens einem asynchronen Motor (10) zum rotatorischen Antreiben von Antriebsrädern,
   - einem Gleichspannungs/Wechselspannungs-Umsetzer (12), der steuerbar ist und als ein Gleichspannungs-Wechselrichter, um den Motor zu versorgen, und alternativ als ein Gleichspannungs-Gleichrichter arbeiten kann,
   - einem Bus (14) für Gleichspannungsversorgung, der mit einer Fahrleitung verbunden und hiervon getrennt werden kann und mit dem Motor für die Versorgung des Umsetzers verbunden ist, um den Umsetzer mit Gleichspannung zu versorgen, wobei dieser Bus mit einer Vorrichtung (24) zum vorübergehenden Aufrechterhalten einer Gleichspannung an dem Bus, wenn der Bus von der Fahrleitung getrennt ist, ausgerüstet ist, und
   - einem Rechner (50), der Folgendes steuern kann:

   a) eine Magnetisierung des Motors und dann
   b) den Betrieb des Motors als Generator und den Betrieb des Umsetzers als Gleichrichter in einer Freilaufbetriebsart, in der der Bus von der Fahrleitung getrennt ist und das Elektrofahrzeug mit seiner Ausrollgeschwindigkeit rollt, **dadurch gekennzeichnet, dass** der Rechner in der Freilaufbetriebsart in der Lage ist, Folgendes zu steuern:
   c) Anhalten des Umsetzers, wenn die Gleichspannung des Busses einen oberen Schwellenwert erreicht, und
   d) Fortsetzen des angehaltenen Zustands des Umsetzers, solange die Gleichspannung des Busses größer als eine minimale Gleichspannung für die Magnetisierung des asynchronen Motors bleibt, bevor die Befehle a) und b) wiederholt werden,

wobei die Pulsation des Gleitens des Motors im Schritt b) gleich $1/T_r$ gewählt wird, wobei $T_r$ die Zeitkonstante des Motors ist.

**7.** Elektrofahrzeug nach Anspruch 6, **dadurch gekennzeichnet, dass** die Vorrichtung (24) zum Vorübergehenden Aufrechterhalten einer Gleichspannung aus wenigstens einem Kondensator (26) gebildet ist, der eine Gleichspannung auf dem Versorgungsbus vorübergehend aufrechterhalten kann, wenn dieser Bus von der Fahrleitung getrennt ist.

**Claims**

**1.** Method for maintaining a direct voltage at the input of a DC/AC voltage converter in order to maintain an asynchronous motor in a magnetised state, the input of the DC/AC converter being electrically connected to a DC supply bus of an electric vehicle, this supply bus being able to be connected to and disconnected from a catenary in order to supply the motor, this method comprising, in a free wheel mode during which the vehicle coasts and the bus is disconnected from the catenary:

> a) a step (76) for magnetising the motor from the direct voltage present on the bus, then
> b) a step (78) for operating the motor as a generator of alternating voltage and operating the converter as a rectifier for the alternating voltage in order to recharge the bus with direct voltage, in free wheel mode, **characterised in that**, the method also comprises:
> c) a step (72) for stopping the converter when the direct voltage of the bus reaches an upper threshold, then
> d) a step (74) for maintaining the converter in the idle state as long as the direct voltage of the bus remains higher than a minimum direct magnetisation voltage of the asynchronous motor before returning to step a), the slip pulse of the motor during step b) being selected to be equal to $1/T_r$ where $T_r$ is the time constant of the motor.

**2.** Method according to claim 1, for an electric vehicle which is equipped with at least one item of auxiliary electrical equipment whose electrical power supply from the bus is automatically cut off when the direct voltage of the bus falls below a minimum supply voltage for the items of auxiliary equipment, **characterised in that** the upper threshold is selected to be lower than this minimum supply voltage for the items of auxiliary equipment.

**3.** Method according to any one of the preceding claims, **characterised in that**, during step b), the converter is controlled so that the energy generated by the motor is greater than the minimum energy required to compensate for the losses caused by heating of the motor and less than 1.05 times this minimum energy.

**4.** Method according to any one of the preceding claims, **characterised in that** steps a) to d) are repeated only for as long as the electric vehicle is coasting at a speed greater than a predetermined speed threshold which allows the bus to be recharged.

**5.** Data recording medium, **characterised in that** it comprises instructions for carrying out a method according to any one of the preceding claims, when these instructions are carried out by an electronic processor.

**6.** Electric vehicle equipped:

> - with at least one asynchronous motor (10) for rotatably driving driving wheels,
> - a controllable DC/AC converter (12) which is capable of functioning as a direct voltage inverter in order to supply the motor and, alternately, as a direct voltage rectifier,
> - a DC supply bus (14) which can be connected to and disconnected from a catenary and which is connected to the motor by means of the converter in order to supply the converter with direct voltage, this bus being equipped with a device (24) for temporarily maintaining a direct voltage on the bus when the bus is disconnected from the catenary, and
> - a processor (50) which is capable of controlling:
>
>> a) a magnetisation of the motor, then
>> b) the operation of the motor as a generator and the operation of the converter as a rectifier during a free wheel mode during which the bus is disconnected from the catenary and the electric vehicle is coasting;
>> **characterised in that** the processor is also capable, during free wheel mode:
>> c) of controlling the stopping of the converter when the direct voltage of the bus reaches an upper threshold, and
>> d) maintaining the converter in an idle state as long as the direct voltage of the bus remains higher than a minimum direct magnetisation voltage of the asynchronous motor, before repeating the commands a) and b), the slip pulse of the motor during step b) being selected to be equal to $1/T_r$ where $T_r$ is the time constant of the motor.

**7.** Electric vehicle according to claim 6, **characterised in that** the device (24) for temporarily maintaining a direct voltage is formed by at least one capacitor (26) which is capable of temporarily maintaining a direct voltage on the supply bus when this bus is disconnected from the catenary.

Fig.1

Fig.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 62071404 A
- JP 57009278 B
- JP 61098187 B